# EUROPEAN PATENT APPLICATION

(11) **EP 3 920 055 A1**
(43) Date of publication of application: **08.12.2021**
(21) Application number: 20177858.6
(22) Date of filing: 02.06.2020
(51) Int. Cl.: G06F 21/10

(54) **SECURED SOFTWARE LICENSE MANAGEMENT SYSTEM AND A METHOD THEREOF**

(71) Applicant: Siemens Aktiengesellschaft, 80333 München (DE)
(72) Inventor: Ghosh, Prameet, 560100 Bangalore, Karnataka (IN); Chichagandi, Pradeep Krishnappa, 560050 Bangalore, Karnataka (IN); Das, Saptarshi, 743273 Habra, West Bengal (IN)
(74) Representative: Patentanwaltskanzlei WILHELM & BECK

(57) **Abstract**

The present invention relates to a method and system for managing secure software licenses using a distributed ledger network. The method comprises receiving a license request from a license requestor and updating the license request on the distributed ledger network, along with a request Identification (ID) corresponding to the license request and verification details corresponding to the license requestor. Further, upon authentication of the license request, a License Update (LU) file is generated and provided to the license requestor for facilitating the licenser requestor to access the license.

## Description

The present invention relates to the field of license management, and more particularly relates to a method and system for secured software license management.

Presently, for a considerable amount of time, modern business processes in digital and process industry have been supported by various digital tools. Highly specialized software solutions are the backbone to deal with challenges of global markets, while staying resource-effective, power-effective and being productive at the same time. With a growth in spending on the software solutions, it has become pertinent to have an effective software license management system in place, which has the capability to reduce, document and control total costs for managing licenses associated with the software solutions. Also, it is important that the license management system is capable of identifying and tracking lifecycle of the licenses and the applications using the licenses.

Moreover, in the existing license management systems, a license server may act as a single point of failure. That is, if a record back-up is not maintained regularly on the license, any unprecedented attack may corrupt the data on the license server, leading to inconsistency of the data. For example, a recycle in the license server can lead to deletion of all the information about a customer or a specific order. As a result, for a huge volume of records over a long period, maintaining the provenance of all the information stored in the license management has become a difficult task. Additionally, maintaining the historical data in the existing license management systems demands scaling of the hardware resources.

Further, in the existing license management systems, the activities like registration and activation of the licenses have limitations, especially for the offline license activation process. That is, in the existing license management systems, the offline license activation process involves manual intervention of a personnel, who must manually process and validate a license request from a customer. Thus, in addition to the above issues, the existing license management systems for offline license activation also pose issues such as human-errors, delay in license activation, additional cost of human resource and speed of the license activation process.

In view of the above, there exists a need for secured software license management system.

Therefore, it is the object of the present invention is to provide a secured license management system.

The object of the present invention is achieved by a method for managing secure software license using a distributed ledger network. The license may be a product license, a software license or any authorization license requested by a license requestor. Further, without limitation, the license may belong to one of the license types - public domain license, permissive license, copyleft or protective license, non-commercial license, proprietary license and a trade secret. The license registration may be initiated by a license requestor, who is a customer and/or a purchaser of the license. The license requestor may request the license from a license store. The license store may be an offline license store or an online license store. The distributed ledger network may be a blockchain network comprising a distributed ledger for storing data/information related to the license, the license requestor and a license central server authorizing the license.

The method comprising receiving, by the license management system, a license request for accessing a software license from a license requestor. Upon receiving the license request, a License Request (LRQ) file corresponding to the license request is created. The LRQ file comprises at least one of a license request Identifier (ID), type of license, quantity of license and a unique serial number of a hardware adapter used for creating the license request. Thereafter, the LRQ file is validated based on the license request ID. Further, the License Update (LU) file corresponding to the LRQ file is generated upon successful validation of the LRQ file. Finally, the LU file is transmitted to a user device associated with the license requestor to facilitate the license requestor for accessing the software license in a secured manner.

In a preferred embodiment, the LRQ file may be validated based on at least one of the license request, approval by blockchain peers and accessibility permissions associated with the license requestor.

In another preferred embodiment, in generating the LU file, the method may comprise registering the LRQ file as a transaction in a predefined batch process maintained in the distributed ledger network. The predefined batch process comprises a plurality of pending LRQ files corresponding to a plurality of license orders. Further, a status flag for each LRQ file in the predefined batch process is maintained to indicate status of processing the LRQ file. Thereafter, the LU files corresponding to each of the LRQ files are sequentially generated in the predefined batch process based on the status flag.

In another preferred embodiment, the LU file may be generated when a count of LRQ files pending in the predefined batch process is greater than a predefined threshold.

In another preferred embodiment, the availability of the LU file may be notified to the license requestor through a user device associated with the license requestor.

In another preferred embodiment, the license management system may receive a license receipt acknowledgement from the license requestor upon successful activation of the LU file on the hardware adapter. Further, the license receipt acknowledgement received from the license requestor may be updated on the distributed ledger network for indicating completion of license activation process.

The object of the present invention is also achieved by a license management system configured for managing secure software license using a distributed ledger network. The license management system comprises at least one processing unit and a memory. The memory is communicatively coupled to the processor and stores processor-executable instructions. The instructions, on execution, cause the processing unit to perform the aforementioned method steps.

The object of the present invention is also achieved by a non-transitory computer readable medium including machine-readable instructions stored therein, that when executed by at least one processing unit, cause the at least one processing unit to manage secure software license using a distributed ledger network.

The present invention is further described hereinafter with reference to illustrated embodiments shown in the accompanying drawings, in which:
FIG 1 shows an exemplary environment for performing secured software license management using a distributed ledger network, according to an embodiment of the present invention.
FIG 2 is a block diagram of a license management system capable of performing secured software license management, according to an embodiment of the present invention.
FIG 3 illustrates a process flowchart of an exemplary method of performing secured software license management, according to an embodiment of the present invention.
FIG 4 shows an exemplary computing system, according to an embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

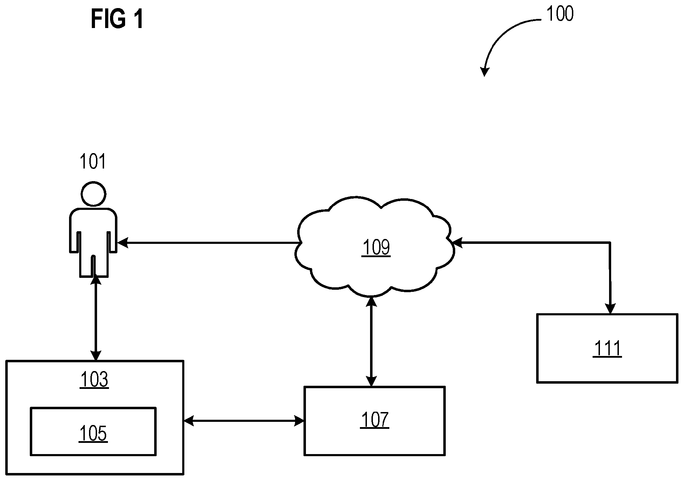

FIG 1 shows an exemplary environment for managing secured software license using a distributed ledger network 109, according to an embodiment of the present invention.

In an embodiment, the environment 100 includes a license requestor 101, a license store 103, a license management system 107, a distributed ledger network 109 and a license central server 111. In an embodiment, the license requestor 101 may be a person or an organization that has requested a particular license at the license store 103. In an embodiment, the license store 103 may be an industry mall, a license hub and/or a retail license centre, which allows the license requestor 101 to order and/or purchase a required license. Alternatively, the license store 103 may be an online license store such as a webstore that allows a license requestor 101 to place online orders for purchasing the required licenses. In an embodiment, the license store 103 may be communicatively coupled with the license central server 111 for dynamically placing license orders, updating status of the orders, tracking the status of the orders and the like. In an embodiment, the license store 103 may be responsible for issuing license dongles and/or hardware license adaptors to the license requestor 101 for allowing the users to register, activate, protect and prevent unauthorized usage or unwanted distribution of the high-value licenses and the corresponding software applications. Additionally, the hardware adapters may contain the license details for a particular version of license being requested by the license requestor 101. In an embodiment, both the license store 103 and the associated license central server 111 may be commonly owned and managed by an authorized license creator.

In an embodiment, the license store 103 may be further associated with a License Administrator Unit (LAU) 105, which may be an interface designed and managed by the authorized license issuer and used by the store administrators to manage licensing activities in the respective license store 103. As an example, the license administrator unit 105 may be a User Interface (UI) in the form of a web application or a mobile application, which is configured/installed on a computing system located at the offline license store 103. In an embodiment, the license administrator unit 105 may be the best protected application to secure an offline mode of license registration at an offline license store 103. Additionally, in the online mode of license registration, the license administrator unit 105 may establish a secure connection between the license store 103 and a back-office of the license central server 111. On the other hand, in the offline scenario, the license administrator unit 105 may reside in the plant and/or the license store and only work as an application for the license requestor 101 to create license request or import license update or create license receipt for the hardware adapter. That is, in some embodiments, the primary functionality of the license administrator unit 105 is to activate and integrate the license from the license central server 111 to the hardware adapter. Additionally, the license administrator unit 105 may be configured to lock and/or unlock the hardware adapter based on certain predefined conditions. As an example, the predefined conditions may be set based on a user blacklist directory or in the situation of a license misuse.

In an embodiment, the license management system 107 may be an application in the license central back-office, which works as an interface for the license requestor 101 to upload the license request, receipt file or download the license update from the distributed ledger network 109. In an alternative embodiment, the license management system 107 may be a computing unit configured at the license store 103. In another embodiment, the license management system 107 may be a software application, that may be installed in a computing device associated with the store administrator or the license requestor 101.

In an embodiment, the distributed ledger network 109 may be a blockchain network. The distributed ledger network 109 may be configured in connection with the license management system 107 and the license central server 111. In an embodiment, the information generated at each stage of the license life cycle may be dynamically updated on the distributed ledger network 109, such that multiple instances of the information related to the license are maintained, in order to enhance ease of managing the license management process.

In an embodiment, the license central server 111 may be hosted from a back-office of the licensing authority that is responsible for creation, modification and maintenance of the licenses. The license central server 111 may be configured to keep a track of the licenses issued for different users, throughout the life cycle of the license. In an embodiment, when a license requestor 101 orders/purchases a license from the license store 103 through the license administrator unit 105, a ticket having a unique ticket ID may be created in the license central server 111, which then stores all the relevant information for the order recognized by the unique ticket ID.

In an embodiment, the license management system 107 may be configured to receive a License Request from the license requestor 101. The license request may be received through the license administrator unit 105 associated with the license store 103. Subsequent to receiving the license request, the license management system 107 may create a License Request (LRQ) file corresponding to the license request. In an embodiment, the LRQ file may comprise information including, without limiting to, a license request Identifier (ID), type of license, quantity of license and a unique serial number of the hardware adapter used for creating the license request. In an embodiment, the license management system 107 may dynamically update the information related to the LRQ file on the distributed ledger network 109 along with other crucial information such as the unique request Identification (ID) corresponding to the license request and verification details corresponding to the license requestor 101. As an example, the verification details corresponding to the license requestor 101 may include, without limiting to, pre-set login credentials of the license requestor 101 and other license requestor 101 information such as phone number, electronic mail identity (e-mail ID), and physical address of the license requestor 101, which may be used for validating the authenticity of the license requestor 101.

In an embodiment, once the license request is updated on the distributed ledger network 109, the license central server 111 may validate the license request based on information such as the request ID and the verification details provided by the license requestor 101. Upon successful validation, the license central server 111 may create a License Update (LU) file corresponding to the license request. In an embodiment, the license update file may be treated as a permission given to the license requestor 101, for allowing the license requestor 101 to access the requested license. Once the license update file has been created, the license central server 111 may store a copy of the license update file on the distributed ledger network 109. Subsequently, the license management system 107 may receive a copy of the license update file from the license central server 111 and/or the distributed ledger network 109.

In an embodiment, upon receiving the license update file, the license management system 107 may generate a notification about availability of the license update file and provide it to the license requestor 101. Subsequently, the license requestor 101 may access the license by importing and executing the license update file through the license administrator unit 105. Additionally, a notification and/or an acknowledgement, confirming the completion of the license registration process, may be created and transmitted to the license central server 111 via the license management system 107. That is, the license management system 107 may be configured to receive a license receipt from the license requestor 101. The license central server 111 may store the acknowledgement and keep a track of the license life cycle. A copy of the acknowledgement may be also updated on the distributed ledger network 109 for maintaining a secure copy of the information relating to the license management process.

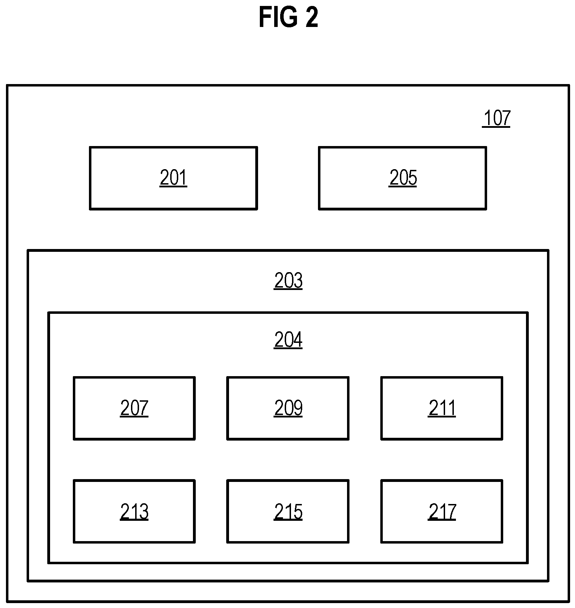

FIG 2 is a block diagram of the license management system 107 capable of performing secure software license management, according to an embodiment of the present invention.

In an embodiment, the license management system 107 may comprise, without limiting to, a I/O interface 201, a memory 203, a processing unit 205. In an embodiment, the I/O interface 201 may be communicatively interfaced with the license store 103 for receiving the license request created by the license requestor 101 and to return the license update file created by the license central server 111, back to the license store 103. The memory 203 may be communicatively coupled to the processing unit 205 and may store data and instructions required for operating the license management system 107. Additionally, the memory 203 may comprise a secure license management module 204. The secure license management module 204 comprises a receiving module 207, a file creation module 209, a validating module 211, an updating module 213, a transmitting module 215 and other modules 217. The processing unit 205 may be configured to perform one or more functions of the license management system 107 for managing a secure software license using the data stored in the memory 203 and one or more modules configured in the license management system 107.

In an embodiment, the receiving module 207 may be configured for receiving a License Request from a license requestor 101. The license request may be received through a License Administrator Unit (LAU) 105 associated with the license store 103.

In an embodiment, the file creation module 209 may be configured for creating a License Request (LRQ) file corresponding to the license request. As an example, the LRQ file may include, without limiting to, a license request Identifier (ID), type of license, quantity of license and a unique serial number of a hardware adapter used for creating the license request.

In an embodiment, the validating module 211 may be configured for validating the LRQ file based on the license request ID. In an embodiment, the validating module 211 may be also configured for authenticating the license requestor 101 requesting the license. As an example, the validating module 211 may validate genuineness/authenticity of the license requestor 101 by comparing details provided by the license requestor 101 at the time of requesting the license with corresponding user details pre-stored in the license management system 107. In an embodiment, upon successful validation, the information related to the license request may be updated on the distributed ledger network 109. Also, the license request may be registered into a predefined batch process maintained in the distributed ledger network 109. The predefined batch process may comprise a plurality of license requests pending in the distributed ledger network 109.

In an embodiment, the updating module 213 may be configured for generating the License Update (LU) file corresponding to the LRQ file upon successful validation of the LRQ file.

In an embodiment, the transmitting module 215 may be configured for transmitting the LU file to a user device associated with the license requestor to facilitate the license requestor for accessing the software license in a secured manner. In an alternative embodiment, the transmitting module 215 may be configured for notifying the availability of the license update file to the license requestor 101 and the license central server 111. The notification may be provided using existing communication modes such as electronic mail, offline mail, Short Message Service (SMS) and the like.

In an embodiment, the other modules 217 may be used to perform various miscellaneous functionalities of the license management system 107.

Advantageously, the method and the blockchain powered license management system 107 of the present disclosure ensure traceability, availability and immutability of the license information without compromising the security for the sensitive license information of the license store 103 and customer plant application. Additionally, in the back-office or the license central server 111, the distributed ledger network 109 may be employed, wherein the license central server 111, the systems application and products (SAP) systems become the participants of the distributed ledger network 109. Rather than having a centralized entity (the license central server 111) to store and maintain all the license transactions, multiple participants may be used in the network, that work simultaneously through a consensus algorithm. Thus, rather than having to rely on one entity and the risk associated with it, the method of the present disclosure uses multiple different versions of the license information that is collectively produced. In other words, decentralization of the information, which is the key to blockchain networks, may be implemented for record keeping and traceability of the license management systems.

Thus, advantages of the method and the license management system 107 of the present disclosure may be summarized with respect to following parameters:
Traceability: When all the license requests are recorded as transactions in the distributed ledger network 109, the records may be tracked back to their origin. Any changes in the ticket, license or the customer information may be stored as a separate transaction in in the distributed ledger network 109. The lifecycle of an order or issued licenses may be easily traceable in the blockchain. This historical transaction data may help to verify the authenticity of the assets for further uses.
Availability: Since the distributed ledger network 109 may not be hosted on a single computer or a server, it may be hosted on every node connected to the network and hence license management system 107 may not face any downtime issues.
Immutability: In the existing scenarios, a recycle in the license central server 111 may lead to deletion of all the information related to the license, the license requestor 101. For a huge volume of the records over a long period, maintaining the provenance of all the information in the license management system 107 may be a difficult task. With the introduction of the distributed ledger network 109, no transaction may be deleted since a deletion of the record is also posted as a transaction in the distributed ledger network 109.
Security: All the orders and associated conditions must be agreed upon before they are recorded in the distributed ledger network 109. After a transaction is approved, it is encrypted and linked to the previous transaction. This scenario, combined with the fact that the information is stored across a network of computers instead of a single server, makes it nearly impossible for hackers to compromise the transaction data on the distributed ledger network 109. For a license system, where protecting the sensitive user information and license information is crucial, the distributed ledger network 109 brings the opportunity to really change how critical information may be shared by helping to prevent fraud and unauthorized activity.
Improved Overall transparency: A clear view of information such as contracts or procurement records to establish understanding of the license types, quantity, expiration date, user information may be present in the license system powered by the distributed ledger network 109. All the network participants may the same documentation as opposed to individual copies. To change a single transaction record, it would require alteration of all the subsequent records and the collusion of the entire network. Thus, data on a distributed ledger network 109 may be considered more accurate. With different components of the license systems in the distributed ledger network 109, it allows separated sophisticated views for different stakeholders like back-office admins, auditor or the users.
Automated activation process and efficiency: By streamlining and automating the above licensing processes with the blockchain, the license requests/transactions may be completed faster and more efficiently. Since the transaction-keeping is performed using a single digital ledger that is shared among participants, there may be very less clutter. Also, the human intervention is completely avoided in the back office by storing the license request file in the distributed ledger network 109 and running an automated batch program on the records in ABN to create a license update file. This eliminates the risk of human fallibility and any process delay and reduces the operational costs associated with it.
License Audit: As all the historical data may be present in the distributed ledger network 109, it ends up with an audit trail that shows lifecycle of orders, issued hardware adapters, customer information, operational costs and every update it made during the life time of the license.

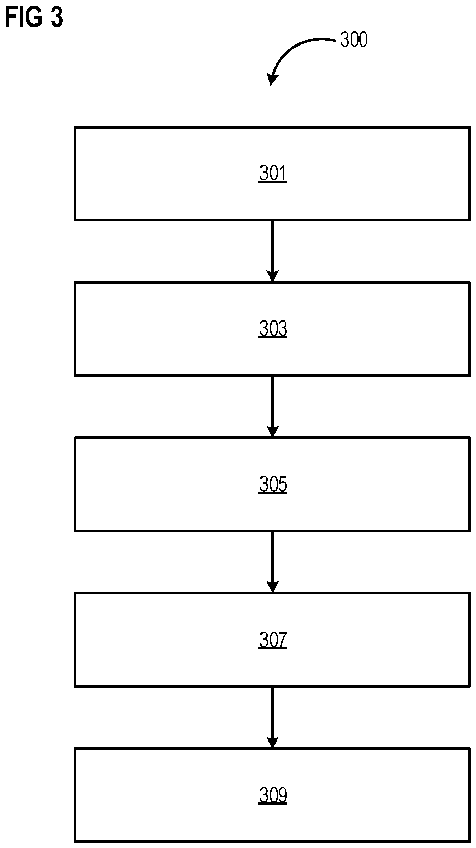

FIG 3 illustrates a process flowchart of an exemplary method for managing secure software license, according to an embodiment of the present invention.

At step 301, the license management system 107 receives a license request from a license requestor 101. The license request may be received through a License Administrator Unit (LAU) 105 associated with a license store 103.

At step 303, the license management system 107 creates the License Request (LRQ) file corresponding to the license request. As an example, the LRQ file may comprise at least one of a license request Identifier (ID), type of license, quantity of license and a unique serial number of a hardware adapter used for creating the license request.

At step 305, the license management system 107 validates the LRQ file based on the license request ID and the pre-stored validation information stored on the distributed ledger network. As an example, the pre-stored validation information may comprise, without limiting to, at least one of license request, approval by blockchain peers and accessibility permissions associated with the license requestor. In an embodiment, generating the LU file may comprise registering the LRQ file as a transaction in a predefined batch process maintained in the distributed ledger network. The predefined batch process may comprise a plurality of pending LRQ files corresponding to a plurality of license orders. Further, a status flag for each LRQ file may be maintained in the predefined batch process, such that the status flag indicates status of processing the LRQ file. Finally, the LU files corresponding to each of the LRQ files may be sequentially generated in the predefined batch process based on the status flag.

At step 307, the license management system 107 generates a License Update (LU) file corresponding to the LRQ file upon successful validation of the LRQ file. In an embodiment, the LU file may be generated when a count of LRQ files pending in the predefined batch process is greater than a predefined threshold.

At step 309, the license management system 107 transmits the LU file to a user device associated with the license requestor to facilitate the license requestor for accessing the software license in a secured manner. In an embodiment, the availability of the LU file may be notified to the license requestor using any of the available communication channels.

In an embodiment, the license management system 107 may be further configured to receive a license receipt acknowledgement from the license requestor upon successful activation of the LU file on the hardware adapter. Further, the license receipt acknowledgement may be updated on the distributed ledger network for indicating completion of license activation process.

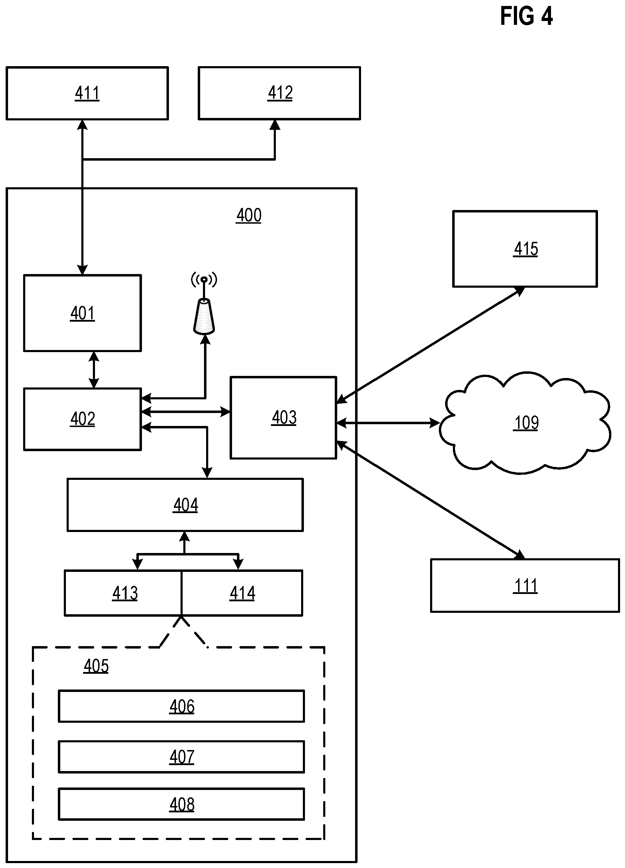

FIG 4 shows an exemplary computing system, according to an embodiment of the present invention.

In an embodiment, the computer system 400 may be the license management system 107 illustrated in FIG. 1, which may be configured for performing secure software license management using a distributed ledger network 109. The computer system 400 may include a central processing unit ("CPU" or "processor") 402. The processor 402 may comprise at least one data processor for executing program components for executing user- or system-generated business processes. A license requestor may include a customer purchasing the license, a license manager, an organization or any system/sub-system being operated parallelly to the computer system 400. The processor 402 may include specialized processing units such as integrated system (bus) controllers, memory management control units, floating point units, graphics processing units, digital signal processing units, etc.

The processor 402 may be disposed in communication with one or more input/output (I/O) devices (411 and 412) via I/O interface 401. The I/O interface 401 may employ communication protocols/methods such as, without limitation, audio, analog, digital, stereo, IEEE®-1394, serial bus, Universal Serial Bus (USB), infrared, PS/2, BNC, coaxial, component, composite, Digital Visual Interface (DVI), high-definition multimedia interface (HDMI), Radio Frequency (RF) antennas, S-Video, Video Graphics Array (VGA), IEEE® 802.n /b/g/n/x, Bluetooth, cellular (e.g., Code-Division Multiple Access (CDMA), High-Speed Packet Access (HSPA+), Global System For Mobile Communications (GSM), Long-Term Evolution (LTE) or the like), etc. Using the I/O interface 401, the computer system 400 may communicate with one or more I/O devices 411 and 412.

In some embodiments, the processor 402 may be disposed in communication with a communication network via a network interface 403. The network interface 403 may employ connection protocols including, without limitation, direct connect, Ethernet (e.g., twisted pair 10/100/1000 Base T), Transmission Control Protocol/Internet Protocol (TCP/IP), token ring, IEEE® 802.11a/b/g/n/x, etc. Using the network interface 403, the computer system 400 may communicate with a web user interface (UI) or web client 415 associated with the license management system 107. Using the web UI 415, a license requestor in the license store 103 may upload the license request and download a license update file from the license management. In an embodiment, the license administrator unit 105 may be configured in the license store 103 for an offline/online registration process, and may have only responsibility of creating the license request from the hardware adapter and importing the license update file into the hardware adapter. Additionally, using the network interface 403, the computer network 400 may connect to the distributed ledger network 109 and also to the license central server 111 in case of online license registration process.

In an implementation, the communication network may be implemented as one of the several types of networks, such as intranet or Local Area Network (LAN) and such within the organization. The communication network may either be a dedicated network or a shared network, which represents an association of several types of networks that use a variety of protocols, for example, Hypertext Transfer Protocol (HTTP), Transmission Control Protocol/Internet Protocol (TCP/IP), Wireless Application Protocol (WAP), etc., to communicate with each other. Further, the communication network may include a variety of network devices, including routers, bridges, servers, computing devices, storage devices, etc.

In some embodiments, the processor 402 may be disposed in communication with a memory 405 (e.g., RAM 413, ROM 414, etc. as shown in FIG. 4) via a storage interface 404. The storage interface 404 may connect to memory 405 including, without limitation, memory drives, removable disc drives, etc., employing connection protocols such as Serial Advanced Technology Attachment (SATA), Integrated Drive Electronics (IDE), IEEE-1394, Universal Serial Bus (USB), fiber channel, Small Computer Systems Interface (SCSI), etc. The memory drives may further include a drum, magnetic disc drive, magneto-optical drive, optical drive, Redundant Array of Independent Discs (RAID), solid-state memory devices, solid-state drives, etc.

The memory 405 may store a collection of program or database components, including, without limitation, user/application interface 406, an operating system 407, a web browser 408, and the like. In some embodiments, computer system 400 may store user/application data 406, such as the data, variables, records, etc. as described in this invention. Such databases may be implemented as fault-tolerant, relational, scalable, secure databases such as Oracle® or Sybase®.

The operating system 407 may facilitate resource management and operation of the computer system 400.

The user interface 406 may facilitate display, execution, interaction, manipulation, or operation of program components through textual or graphical facilities. For example, the user interface 406 may provide computer interaction interface elements on a display system operatively connected to the computer system 400, such as cursors, icons, check boxes, menus, scrollers, windows, widgets, and the like.

The web browser 408 may be a hypertext viewing application. Secure web browsing may be provided using Secure Hypertext Transport Protocol (HTTPS), Secure Sockets Layer (SSL), Transport Layer Security (TLS), and the like. Further, the computer system 400 may implement a mail server stored program component. In some embodiments, the computer system 400 may implement a mail client stored program component.

Furthermore, the present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

**Reference numerals:**

| **Reference numeral** | **Label** |
|---|---|
| 100 | Environment |
| 101 | License requestor |
| 103 | License store |
| 105 | License Administrator Unit (LAU) |
| 107 | License management system |
| 109 | Distributed ledger network |
| 111 | License central server |
| 201 | I/O Interface |
| 203 | Memory |
| 204 | Secure license management module |
| 205 | Processing unit |
| 207 | Receiving module |
| 209 | File creation module |
| 211 | Validating module |
| 213 | Updating module |
| 215 | Transmitting module |
| 217 | Other modules |
| 400 | Exemplary computer system |
| 401 | I/O interface of computer system |
| 402 | Processor |
| 403 | Network interface |
| 404 | Storage interface |
| 405 | Memory of the computer system |
| 406 | User/Application interface |
| 407 | Operating system |
| 408 | Web browser |
| 411 | Input devices |
| 412 | Output devices |
| 413 | Random Access Memory (RAM) |
| 414 | Read-Only Memory (ROM) |
| 415 | Web client |

## Claims

1. A method (300) for managing secure software license using a distributed ledger network (109), the method (300) comprising:
receiving (301), by a license management system (107), a license request for accessing a software license from a license requestor (101);
creating (303), by the license management system (107), a License Request (LRQ) file corresponding to the license request, wherein the LRQ file comprises at least one of a license request Identifier (ID), type of license, quantity of license and a unique serial number of a hardware adapter used for creating the license request;
validating (305), by the license management system (107), the LRQ file based on the license request ID and pre-stored validation information stored in the distributed ledger network (109);
generating (307), by the license management system (107), a License Update (LU) file corresponding to the LRQ file upon successful validation of the LRQ file; and
transmitting (309), by the license management system (107), the LU file to a user device associated with the license requestor (101) to facilitate the license requestor (101) for accessing the software license in a secured manner.

2. The method (300) according to claim 1, wherein the pre-stored validation information comprises at least one of the license request, approval by blockchain peers and accessibility permissions associated with the license requestor (101).

3. The method (300) according to claim 1 or 2, wherein generating (307) the LU file comprises:
registering the LRQ file as a transaction in a predefined batch process maintained in the distributed ledger network (109), wherein the predefined batch process comprises a plurality of pending LRQ files corresponding to a plurality of license orders;
maintaining a status flag for each LRQ file in the predefined batch process, wherein the status flag indicates status of processing the LRQ file; and
sequentially generating the LU files corresponding to each of the LRQ files in the predefined batch process based on the status flag.

4. The method (300) according to claim 1 or 3, wherein generating (307) the LU file comprises generating the LU file when a count of LRQ files pending in the predefined batch process is greater than a predefined threshold.

5. The method (300) according to claims 1 to 4, further comprising notifying availability of the LU file to the license requestor (101) .

6. The method (300) according to claim 5, further comprising:
receiving a license receipt acknowledgement from the license requestor (101) upon successful activation of the LU file on the hardware adapter; and
updating the license receipt acknowledgement on the distributed ledger network (109) for indicating completion of license activation process.

7. A license management system (107) comprising:
at least one processing unit (205); and
a memory (203) communicatively coupled to the processing unit 205, wherein the memory (203) comprises a secure license management module (204) configured to perform any of method steps according to claims 1 to 6.

8. A non-transitory computer readable medium including machine-readable instructions stored therein, that when executed by at least one processing unit 205, cause the processing unit 205 to perform any of method steps according to claims 1 to 6.
